# FASCICULE DE BREVET EUROPEEN

(11) **EP 3 627 088 B1**
(45) Date de publication et mention de la délivrance du brevet: **26.05.2021**
(21) Numéro de dépôt: 19198128.1
(22) Date de dépôt: 18.09.2019
(51) Int. Cl.: F28F 25/02, F28G 3/02, F28G 3/04, F28C 1/00, F28G 15/02, F28G 15/04

(54) **DISPOSITIF ET PROCEDE DE DETARTRAGE D'ALVEOLES**
VORRICHTUNG UND VERFAHREN ZUM ENTKALKEN VON ALVEOLEN
DEVICE AND METHOD TO DESCALE HONEYCOMBS

(30) Priorité: 21.09.2018 FR 1858614
(43) Date de publication de la demande: 25.03.2020
(73) Titulaire: Soletanche Freyssinet, 92500 Rueil-Malmaison (FR)
(72) Inventeur: GUERTNER, Jean-François, 95470 Fosses (FR); SAUVAGE, Jonathan, 26130 Montsegur-sur-Lauzon (FR); PITTORINO, Florent, 69100 Villeurbanne (FR); FRONT, Benjamin, 69270 Couzon-au-Mont-d'Or (FR)
(74) Mandataire: Plasseraud IP

(56) Documents cités:
- EP-A1- 3 330 660
- WO-A1-2011/042187
- FR-A1- 3 059 089
- US-A- 4 015 304

## Description

L'invention concerne le domaine de l'entretien d'installations nucléaires, et plus particulièrement du détartrage des systèmes de refroidissement de l'eau du circuit tertiaire d'une centrale nucléaire.

Les tours aéroréfrigérantes sont utilisées pour refroidir l'eau du circuit de refroidissement des centrales nucléaires. Le principe est de refroidir l'eau par pulvérisation sur une surface plane et alvéolée composée de corps d'échanges. Ces corps d'échanges sont parfois appelés *packing.* Ils permettent à l'eau de ruisseler et de refroidir au contact de la circulation d'air dans les alvéoles.

Ces packings ont tendance à s'entartrer plus ou moins rapidement selon les propriétés de l'eau de refroidissement. La présence de tartre est particulièrement problématique car elle diminue grandement l'efficacité de l'échange thermique, allant parfois jusqu'à empêcher complétement le ruissellement lorsque les alvéoles sont bouchées. De plus, le tartre alourdit les packings et génère un risque de chute de ces derniers.

Il est donc nécessaire de détartrer les packings très régulièrement, afin d'éviter d'avoir à les remplacer de façon systématique.

A cet effet, on connait deux méthodes de détartrage : la déflagration d'air et le grattage.

La déflagration d'air est un principe de fragilisation de la couche de tarte par déformation des packings au moyen d'une onde acoustique. Cette onde est créée par un canon à déflagration d'air. Cette solution n'est pas très efficace et n'est utilisée que dans le cas de packings à grilles. Ce procédé est par exemple décrit dans le brevet FR2903178B1.

Le grattage est un procédé d'insertion de tiges munies de tête de grattage, dans les alvéoles d'un certain type de packing. Lesdites têtes vont déformer et casser la couche de tartre, et ainsi permettre le détartrage des alvéoles. Par exemple, le document WO 2011/042187 A1 décrit un tel dispositif. Ce document montre le préambule de la revendication 1. Cependant, les procédés connus ne permettent pas de pénétrer des couches de tartre trop importantes car les tiges n'ont pas assez de force pour pénétrer dans les alvéoles.

De plus, les procédés connus ne permettent pas d'éliminer tout le tartre contenu dans les alvéoles et une couche résiduelle de tartre dans les packings est observée.

Enfin, cette technologie ne permet pas de détartrer les trois lits d'alvéoles étagés d'un packing. Les packings ne sont donc pas détartrés sur toute leur hauteur. Cela est notamment dû à l'épaisseur des tiges qui sont trop fines et donc trop peu rigides pour traverser tous les lits d'alvéoles. La finesse des tiges est corrélée au fait que la technologie utilisée repose sur une énergie pneumatique.

Il existe donc un besoin pour un nouveau dispositif permettant de détartrer une tour aéroréfrigérante efficacement, y compris lorsque les alvéoles sont complètement bouchées par le tartre.

L'invention permet de répondre à ce besoin au moyen d'un dispositif de détartrage d'une alvéole de corps d'échange d'une tour aéroréfrigérante comprenant au moins une tige susceptible de pénétrer au moins une alvéole et des moyens permettant la mise en rotation de ladite au moins une tige au sein de l'alvéole de façon à fissurer un dépôt tartrique.

Grâce à l'ajout d'une composante rotative au mouvement de la tige et de la tête de grattage, l'invention permet de déformer plus efficacement l'ensemble d'une alvéole entartrée afin de casser la couche de tartre et de la faire tomber.

La rotation permet aussi à la tête de grattage d'agir comme une perceuse et de creuser dans le tartre, ce qui permet également de détartrer une alvéole complètement bouchée, qui resterait insensible à une tête de grattage animée d'un unique mouvement de translation.

De préférence, ladite au moins une tige est configurée pour être animée d'un mouvement linéaire selon son axe de rotation. Le mouvement résultant est donc hélicoïdal. Un tel mouvement permet d'accentuer l'effet de perçage et d'accéder aux étages d'alvéoles supérieurs.

Au moins une tige peut présenter à son extrémité une forme adaptée à la déformation d'alvéole, de préférence choisie parmi une flèche rigide et une flèche déformable. Cette forme peut résulter de la fixation d'un outil à l'extrémité de la tige, ou alternativement, consister en une modification de la forme même de la tige qui est alors 'un seul tenant. Cela peut par exemple résulter d'un usinage particulier de la tige.

La forme de l'extrémité, qui constitue une véritable tête de grattage, doit permettre de déformer l'alvéole efficacement. Il peut s'agir d'un pas de vis, ou d'aspérités tranchantes ou perçantes.

Avantageusement, la forme de l'extrémité peut dépendre du mouvement de la tige.

Ainsi, la forme adaptée à la déformation d'alvéole peut comporter au moins une masselotte mobile susceptible d'être mise en mouvement par force centrifuge lorsqu'elle est mise en rotation. Ainsi, lorsque la tige, et donc son extrémité, est mise en rotation, la masselotte est plus ou moins éloignée ou rapprochée de l'axe de rotation selon la vitesse de rotation et déforme donc une partie différente de l'alvéole ce qui permet d'augmenter l'efficacité du détartrage.

Au moins une tige peut avantageusement être susceptible de pénétrer plusieurs lits d'alvéole étagés suivant l'axe de rotation de la tige, de préférence trois lits d'alvéoles étagés. Le mouvement de rotation peut permettre de limiter l'effort à fournir par la tige pour traverser les lits d'alvéoles, ce qui permet de pénétrer plusieurs lits d'alvéoles avec une rigidité moindre. De plus, la tige selon l'invention peut être plus rigide que celles de l'art antérieur car le positionnement des tiges est mieux maîtrisé étant donné l'asservissement automatique et permet d'éviter notamment le contact avec les broches et donc la déformation des tiges. Enfin, la tige selon l'invention est capable de percer une alvéole complètement bouchée, ce qui lui permet d'accéder à un lit d'alvéole supérieur même lorsqu'un lit inférieur comporte des alvéoles bouchées, contrairement aux tiges connues jusque-là.

Lorsque le dispositif comporte une pluralité de tiges, les tiges sont de préférence susceptibles d'être mises en mouvement simultanément. La mise en mouvement peut se faire par le moyen d'un ou plusieurs moteurs, de préférence électriques mais pas nécessairement.

La mise en rotation de ladite au moins une tige est par exemple effectuée par au moins un train d'engrenage.

Le dispositif selon l'invention peut avantageusement comporter en outre au moins un moyen d'évacuation du tartre, de préférence un moyen de soufflage.

En effet, au fur et à mesure que le tartre est cassé, il peut être nécessaire de l'évacuer afin d'éviter de gripper la tige et pour lui permettre de poursuivre efficacement le détartrage. Le dispositif peut alors également être couplé à un système de récupération du tartre afin d'éviter de souiller le sol à l'aplomb des alvéoles et/ou afin de réutiliser le tartre. Un moyen de soufflage peut par exemple être une buse de soufflage alimenté par un compresseur d'air.

Le dispositif selon l'invention comporte de préférence une motorisation électrique. En effet, l'énergie électrique est plus efficace et moins onéreuse que l'énergie pneumatique.

Le dispositif selon l'invention comporte de préférence en outre un système d'échappement agencé sur ladite au moins une tige configuré pour effacer ladite au moins une tige lorsqu'une résistance opposée par le packing excède un seuil prédéterminé.

Un autre objet de la présente invention consiste en un procédé de détartrage d'alvéoles de corps d'échange d'une tour aéroréfrigérante comportant une étape d'introduction d'au moins une tige animée d'un mouvement hélicoïdal au sein d'une alvéole afin de provoquer la fissuration d'un dépôt tartrique.

L'homme du métier saura adapter le dispositif aux spécificités éventuelles de son installation qui ne sauraient être énumérées ici, et en particulier en fonction de la forme des alvéoles, du nombre de lits, de l'étendue de la surface à détartrer etc. Ainsi, le matériau et la rigidité des tiges peut être variable ; de même la puissance de la motorisation nécessaire à l'invention peut varier. Le dispositif selon l'invention peut être automatisé et effectuer le détartrage d'une tour de façon autonome, notamment au moyen d'algorithmes obtenus par des méthodes d'apprentissage statistique ou *machine learning.* Alternativement, le dispositif peut être monté sur un véhicule piloté par un être humain. Tous ces modes alternatifs constituent des améliorations périphériques qui ne sortent pas du cadre de l'invention.

L'invention pourra être mieux comprise à l'aide des exemples de réalisation non limitatifs décrits ci-après, et à l'examen du dessin annexé sur lequel :
- la figure 1 est une représentation schématique d'une machine à tige selon l'invention et d'un packing d'alvéoles,
- la figure 2 est une vue en coupe de la machine à tige de la figure 1,

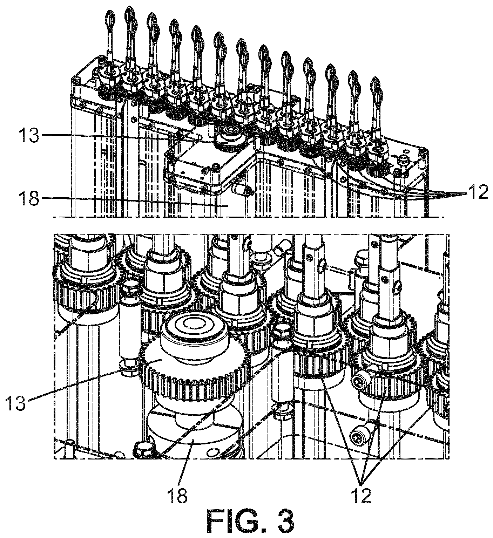

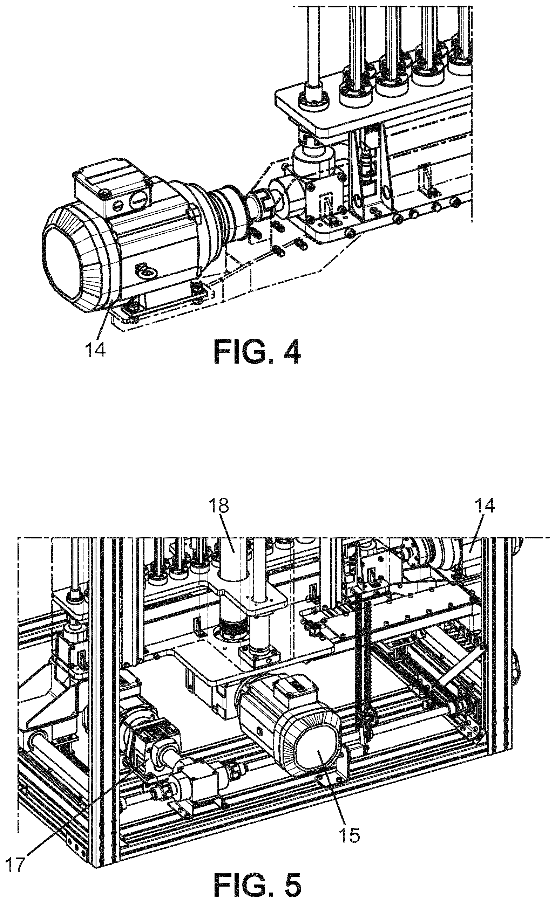

- les figures 3, 4 et 5 et sont des vues de détails de la figure 2, et
- les figures 6 et 7 représentent une vue de dessous d'un packing d'alvéole à différents stades d'un procédé de détartrage selon l'invention.

Les exemples qui suivent permettront de mieux appréhender la présente invention, sans pour autant en limiter la portée.

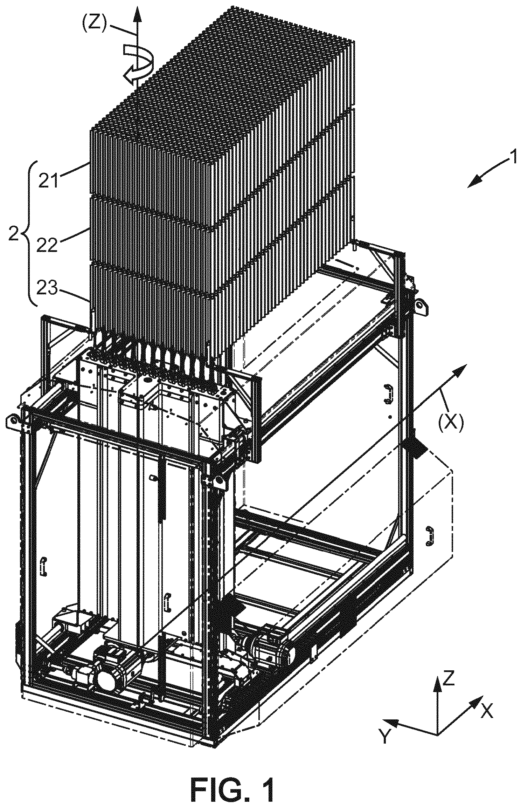

Dans l'exemple de réalisation illustré à la figure 1, il est représenté une machine à tige 1 comportant une pluralité de tiges 11 engagées à l'intérieur d'un packing 2 à trois niveaux 21, 22 et 23. Les tiges 11 sont munies de pointes en forme de pointes de flèche comprenant un élément excentré prévu pour s'écarter de la tige sous l'effet de la force centrifuge.

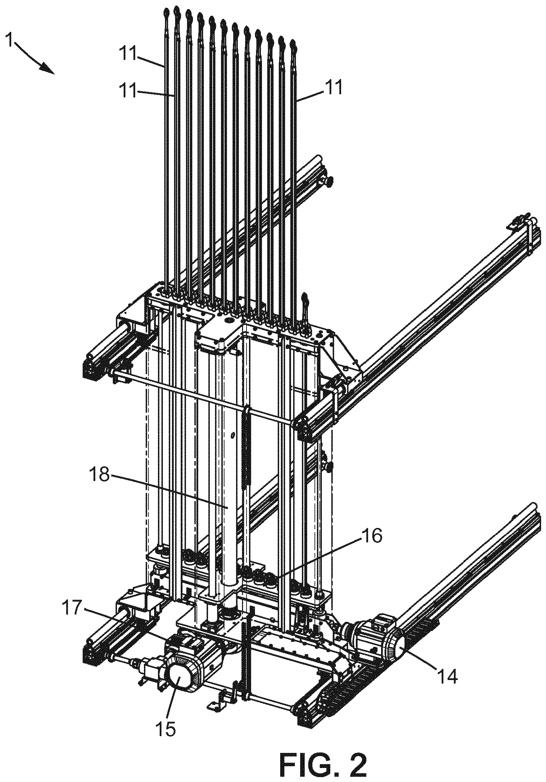

La figure 2 est une représentation de la machine à tige 1 lorsque les tiges ne sont pas engagées dans un packing.

La machine à tige est configurée pour permettre aux tiges 11 d'être engagées dans le packing 2 au moyen d'un mouvement de translation selon (Z), tout en étant animées d'un mouvement de rotation autour de ce même axe. Le mouvement de rotation peut être concomitant, antérieur et/ou postérieur à l'engagement des tiges dans le packing. L'action mécanique des tiges provoquée par ce double mouvement de translation et de rotation permet le nettoyage des alvéoles.

Les pointes présentant une portion configurée pour s'écarter de la tige sous l'effet de la force centrifuge, la mise en rotation de la tige permet d'augmenter l'action détartrante des pointes de la tige.

Grâce à cette action augmentée, l'action des tiges est suffisamment importante pour accéder aux trois lits 21,22, 23 du packing alors que jusqu'à présent, les machines à tige existantes ne pouvaient pas accéder au lit supérieur 21 et ne nettoyaient que les deux lits inférieurs 22 et 23.

Les tiges sont alors désengagées des alvéoles. Le désengagement peut se faire selon une translation selon (Z) éventuellement accompagnée d'un mouvement de rotation afin de faciliter le désengagement. Les tiges 11 désengagées font alors l'objet d'un mouvement de translation dans le plan (XY) de façon à être positionnées sous d'autres alvéoles à nettoyer et le processus se répète.

La pluralité de tiges 11 est par exemple une pluralité de tiges parallèles entre elles et selon une ligne orientée dans une direction (Y). Avantageusement, le nombre de tiges est choisi en fonction du nombre d'alvéoles dans un packing, de façon à permettre un nettoyage des alvéoles plus pratique ou même semi-automatisé.

Alternativement, les tiges pourraient être agencées selon plusieurs lignes parallèles de façon à pouvoir nettoyer plusieurs rangées d'alvéoles simultanément. Ces lignes de tiges pourraient être prévues pour nettoyer des rangées d'alvéoles consécutives ou, alternativement, des rangées d'alvéoles distantes les unes des autres de façon à conserver un espace entre les lignes de tiges pouvant par exemple faciliter leur entretien.

La pluralité de tiges 11 est mise en rotation au moyen d'un système de roues dentées 12 reliées par une chaîne. Les roues dentées 12 sont par exemple actionnées par au moins une roue motrice 13, elle-même mise en mouvement au moyen d'un moteur électrique 15.

L'avance des tiges 11 dans le packing 2, c'est-à-dire le mouvement de translation selon Z des tiges, est par exemple réalisée au moyen d'un système vis écrou animé par un moteur électrique 14. Ce moteur peut être distinct du moteur 15 permettant la mise en rotation des tiges ou, alternativement, il peut s'agir d'un même et unique moteur par exemple muni d'un dispositif de découplage débrayable.

Les tiges sont également configurées pour pouvoir être animées d'un mouvement de translation dans une direction (X). Ce mouvement de translation ne peut s'effectuer que lorsque les tiges ne sont pas engagées au sein d'un packing et est assuré par un moteur 17 pouvant être distinct ou confondu avec l'un et/ou l'autre des moteurs 14 et 15.

Bien que dans le mode de réalisation préféré illustré sur les figures il s'agisse de moteurs électriques, il est entendu que tout autre type de moteur ou moyen de générer la mise en mouvement des tiges en translation et en rotation pourrait être utilisé sans sortir du champ de l'invention.

Le système vis écrou permet la montée d'un plateau pousseur 16 selon la direction (Z) sur lequel sont fixées les tiges 11 par une liaison pivot.

Le mouvement de rotation des tiges est avantageusement indépendant du mécanisme de montée-descente des tiges, c'est-à-dire de translation selon l'axe (Z), l'axe (Z) désignant ici l'axe de la hauteur, et du mécanisme de déplacement dans le plan (XY), en l'espèce de la translation selon l'axe (X). L'indépendance peut résulter soit de l'utilisation de moteurs distincts comme illustré, ou de l'utilisation d'un mécanisme de découplage par exemple débrayable.

La machine à tiges 1 est transportée par un système de levage, par exemple une grue ou une nacelle ciseaux. La commande le la machine à tiges 1 se fait au moyen une Interface Homme Machine (IHM). Ces éléments ne sont pas représentés mais peuvent également permettre d'imprimer un mouvement aux tiges, notamment dans le plan (XY).

Chaque mouvement est créé par un moteur (14, 15 et 17) et un système de transformation de mouvement.

La translation selon X est permise par un système de transformation de mouvement consistant par exemple en un ensemble de chaines et de pignons. Un autre mode possible pour la translation suivant X est l'utilisation d'un système vis-écrou, de préférence à vis trapézoïdale ou vis à billes.

La translation selon Z est permise par un système de transformation de mouvement consistant par exemple en un système vis-écrous déjà évoqué.

Enfin, le mouvement de rotation est permis par un système de transformation de mouvement consistant par exemple en un ensemble d'engrenages. Ce système est par exemple constitué des roues dentées 12, de la roue motrice 13, et d'un arbre de transmission 18 reliée au moteur 15.

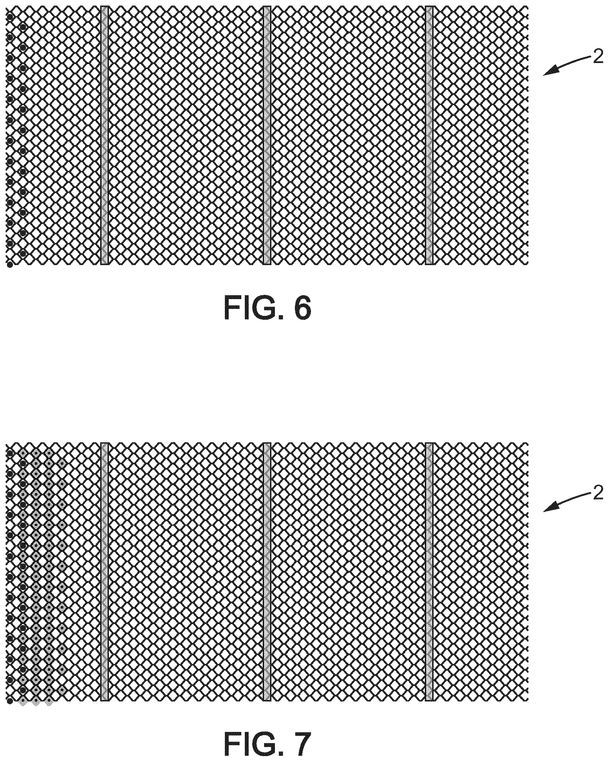

Les figures 6 et 7 représentent un packing 2 vu en coupe. Les alvéoles ont fait l'objet d'une légende différent selon l'étape du cycle de travail de la machine à tige selon l'invention à laquelle elles sont nettoyées.

Le cycle de travail de la machine à tige s'effectue comme suit. En position initiale, les tiges 11 sont en bout du packing, c'est-à-dire positionnées à l'entrée des alvéoles.

Les tiges sont alors mises en mouvement de façon à rentrer dans les alvéoles en face desquelles elles sont positionnées, qui constituent une première série d'alvéoles à nettoyer. Cette première série d'alvéoles est représentée par des alvéoles remplies à gauche de la figure 6 que l'on retrouve sur la figure 7. Dans le cas illustré, cette première série est constituée de deux rangées d'alvéoles. Toutefois, selon l'arrangement des tiges dans la machine à tige, la première série d'alvéoles nettoyées peut consister en tout arrangement d'alvéole pertinent.

Dans une deuxième étape, les tiges sont rétractées et déplacées dans le plan (XY) par exemple au moyen combiné d'une translation selon (X) et d'un déplacement du moyen de levage.

Ce déplacement dans le plan (XY) permet de positionner les tiges 11 face à une deuxième série d'alvéoles.

Le procédé est répété jusqu'à ce que tout le packing 2 soit nettoyé.

La figure 7 permet d'identifier des séries d'alvéoles faisant l'objet d'un nettoyage ultérieur à la première série. Ces alvéoles sont identifiées au moyen d'un point plus petit en leur centre.

Grâce à la machine à tige selon l'invention, il est possible de nettoyer 50% d'un packing en 7 jours, et l'intégralité du packing en 14 jours. Cette durée est à comparer aux machines utilisées dans l'art antérieur qui permettent de nettoyer 30% d'un packing en 6 jours.

Ces durées correspondent à l'utilisation de deux machines à tiges en continu par des équipes se relayant à huit heures d'intervalle.

Avantageusement, l'invention comprend en outre un dispositif de visualisation en temps réèl de l'avancement de l'opération de détartrage. Ce dispositif peut par exemple consister en un dispositif de réalité augmentée.

Avantageusement, il est également procédé à une géolocalisation en milieu fermé de la machine à tiges et à la retranscription en direct sur un support à écran numérique tel qu'une tablette tactile, un téléphone portable ou tout autre écran.

Ces données peuvent alors être enrégistrées, consignées et utilisées pour réaliser de la gestion de patrimoine. Par ailleurs, l'utilisation de lunettes à réalité augmentée peut aussi permettre de visualiser aisément l'état d'avancement de l'opération de détartrage.

## Revendications

1. Dispositif de détartrage (1) d'une alvéole de corps d'échange d'une tour aéroréfrigérante comprenant au moins une tige (11) susceptible de pénétrer au moins une alvéole et **caractérisé en ce qu'**il comprend des moyens (12) permettant la mise en rotation de ladite au moins une tige (11) au sein de l'alvéole de façon à fissurer un dépôt tartrique.

2. Dispositif de détartrage selon la revendication 1, dans lequel ladite au moins une tige est configurée pour être animée d'un mouvement linéaire selon son axe de rotation.

3. Dispositif de détartrage selon la revendication 1 ou 2, au moins une tige présentant à son extrémité une forme adaptée à la déformation d'alvéole, de préférence choisie parmi une flèche rigide et une flèche déformable.

4. Dispositif de détartrage selon la revendication 3, dans lequel la forme adaptée à la déformation d'alvéole comporte au moins une masselotte mobile susceptible d'être mise en mouvement par force centrifuge lorsqu'elle est mise en rotation.

5. Dispositif de détartrage selon l'une quelconque des revendications 1 à 4, au moins une tige étant susceptible de pénétrer plusieurs lits d'alvéole étagés (21, 22, 23) suivant l'axe de rotation de la tige, de préférence trois lits d'alvéoles étagés.

6. Dispositif de détartrage selon l'une quelconque des revendications 1 à 5, dans lequel lesdites au moins une tige constituent une pluralité de tiges, et dans lequel les tiges sont susceptibles d'être mises en mouvement simultanément.

7. Dispositif de détartrage selon l'une quelconque des revendications 1 à 6, dans lequel la mise en rotation de ladite au moins une tige est effectuée par au moins un train d'engrenage (12, 13).

8. Dispositif de détartrage selon l'une quelconque des revendications 1 à 7, comportant en outre au moins un moyen d'évacuation du tartre, de préférence un moyen de soufflage.

9. Dispositif de détartrage selon l'une quelconque des revendications 1 à 8 comportant une motorisation électrique (14, 15, 17).

10. Dispositif de détartrage selon l'une quelconque des revendications 1 à 9 comportant en outre un système d'échappement agencé sur ladite au moins une tige configuré pour effacer ladite au moins une tige lorsqu'une résistance opposée par le packing excède un seuil prédéterminé.

11. Procédé de détartrage d'alvéoles de corps d'échange d'une tour aéroréfrigérante par un dispositif suivant l'une quelconque des revendications 1 à 9, comportant une étape d'introduction d'au moins une tige animée d'un mouvement hélicoïdal au sein d'une alvéole afin de provoquer la fissuration d'un dépôt tartrique.

## Patentansprüche

1. Vorrichtung zum Entkalken (1) einer Austauschkörper-Alveole eines Kühlturms, aufweisend mindestens eine Stange (11), die fähig ist, mindestens eine Alveole zu durchdringen, und **dadurch gekennzeichnet, dass** sie Einrichtungen (12) aufweist, die erlauben, die mindestens eine Stange (11) im Innern der Alveole in Rotation zu versetzen, derart, um eine Kalkablagerung zu spalten.

2. Vorrichtung zum Entkalken nach Anspruch 1, in welcher die mindestens eine Stange konfiguriert ist, zu einer linearen Bewegung entlang ihrer Rotationsachse angeregt zu werden.

3. Vorrichtung zum Entkalken nach Anspruch 1 oder 2, wobei mindestens eine Stange an ihrem Ende eine zur Alveole-Verformung geeignete Form aufweist, die vorzugsweise aus einem starren Pfeil und einem verformbaren Pfeil ausgewählt ist.

4. Vorrichtung zum Entkalken nach Anspruch 3, in welcher die zur Alveole-Verformung geeignete Form mindestens ein bewegliches Fliehgewicht aufweist, das mittels Zentrifugalkraft in Bewegung gesetzt werden kann, wenn es in Rotation versetzt ist.

5. Vorrichtung zum Entkalken nach einem der Ansprüche 1 bis 4, wobei mindestens eine Stange fähig ist, mehrere Etagen Alveolen-Betten (21, 22, 23) entlang der Rotationachse der Stange zu durchdringen, vorzugsweise drei Etagen Alveolen-Betten.

6. Vorrichtung zum Entkalken nach einem der Ansprüche 1 bis 5, in welcher die mindestens eine Stange mehrere Stangen bildet, und in welcher die Stangen gleichzeitig in Bewegung gesetzt werden können.

7. Vorrichtung zum Entkalken nach einem der Ansprüche 1 bis 6, in welcher das Versetzen der mindestens einen Stange in Rotation mit Hilfe eines Getriebezugs (12, 13) erfolgt.

8. Vorrichtung zum Entkalken nach einem der Ansprüche 1 bis 7, ferner aufweisend mindestens eine Einrichtung zum Abführen des Kalks, vorzugsweise eine Gebläseeinrichtung.

9. Vorrichtung zum Entkalken nach einem der Ansprüche 1 bis 8, aufweisend eine elektrische Motorisierung (14, 15, 17).

10. Vorrichtung zum Entkalken nach einem der Ansprüche 1 bis 9, ferner aufweisend ein an der mindestens einen Stange angeordnetes Hemmungssystem, das konfiguriert ist, die mindestens eine Stange rückzustellen, wenn ein von der Packung entgegengebrachter Widerstand eine vorgegebene Schwelle überschreitet.

11. Verfahren zum Entkalken von Austauschkörper-Alveolen eines Kühlturms mit Hilfe einer Vorrichtung nach einem der Ansprüche 1 bis 9, aufweisend einen Schritt zum Einführen mindestens einer Stange, die im Innern einer Alveole zu einer schraubenförmigen Bewegung angeregt wird, um die Spaltenbildung einer Kalkabscheidung zu bewirken.

## Claims

1. A device (1) for descaling an alveolus of an exchange body of an air-cooling tower comprising at least one rod (11) able to penetrate at least one alveolus and **characterized in that** it comprises means (12) enabling the rotation of said at least one rod (11) within the alveolus so as to crack a scale deposit.

2. The descaling device according to claim 1, wherein said at least one rod is configured to be driven in a linear movement according to its axis of rotation.

3. The descaling device according to claim 1 or 2, at least one rod having at its end a shape adapted to the alveolus deformation, preferably selected from a rigid deflection and a deformable deflection.

4. The descaling device according to claim 3, wherein the shape adapted to the alveolus deformation includes at least one movable weight able to be moved by a centrifugal force when driven in rotation.

5. The descaling device according to any one of claims 1 to 4, at least one rod being able to penetrate several stepped alveolus beds (21, 22, 23) according to the axis of rotation of the rod, preferably three stepped alveolus beds.

6. The descaling device according to any one of claims 1 to 5, wherein said at least one rod constitutes a plurality of rods, and wherein the rods are able to be moved simultaneously.

7. The descaling device according to any one of claims 1 to 6, wherein the rotation of said at least one rod is performed by at least one gear train (12, 13).

8. The descaling device according to any one of claims 1 to 7, further including a scale disposal means, preferably a blowing means.

9. The descaling device according to any one of claims 1 to 8 including an electric drive (14, 15, 17).

10. The descaling device according to any one of claims 1 to 9 further including a discharge system arranged on said at least one rod configured to clear said at least one rod when a resistance opposed by the packing exceeds a predetermined threshold.

11. A method for descaling alveolus of an exchange body of an air-cooling tower by a device according to any one of claims 1 to 9, including a step of introducing at least one rod driven in a helical movement within a alveolus in order to cause cracking of a scale deposit.
